# EUROPÄISCHE PATENTSCHRIFT

(11) **EP 3 491 058 B1**
(45) Veröffentlichungstag und Bekanntmachung des Hinweises auf die Patenterteilung: **20.10.2021**
(21) Anmeldenummer: 17731076.0
(22) Anmeldetag: 30.05.2017
(51) Int. Cl.: C08L 23/00, C08L 9/00, F16F 9/05

(54) **KAUTSCHUKMISCHUNG UND ELASTISCHER ARTIKEL ENTHALTEND DIE KAUTSCHUKMISCHUNG**
RUBBER COMPOSITION AND FLEXIBLE ARTICLE COMPRISING SAID RUBBER COMPOSITION
COMPOSITION DE CAOUTCHOUC ET ARTICLE ÉLASTIQUE COMPRENANT LADITE COMPOSITION DE CAOUTCHOUC

(30) Priorität: 26.07.2016 DE 102016213625
(43) Veröffentlichungstag der Anmeldung: 05.06.2019
(73) Patentinhaber: ContiTech Vibration Control GmbH, 30165 Hannover (DE)
(72) Erfinder: REICH-ALBRECHT, Stefan, 31515 Wunstorf (DE); GEDENK, Volker, 30966 Hemmingen (DE); NARBERHAUS, Stefan, 30826 Garbsen (DE); BLANKE, Jürgen, 30890 Barsinghausen (DE)
(74) Vertreter: Continental Corporation
(86) Internationale Anmeldenummer: PCT/EP2017/062967
(87) Internationale Veröffentlichungsnummer: WO 2018/019451

(56) Entgegenhaltungen:
- EP-A1- 2 157 125
- WO-A2-2013/186091
- DE-A1-102007 060 859
- DE-A1-102008 015 023
- DE-A1-102014 219 613

## Beschreibung

Die Erfindung betrifft eine Kautschukmischung und einen elastischen Artikel, der die Kautschukmischung enthält. Der Artikel ist bevorzugt ein Luftfederbalg, ein Metall-Gummi-Element, ein Schwingungsdämpfer oder ein Lager, bspw. Kastenlager oder ein Konuslager, insbesondere ein Formartikel für gummigefederte Schienenfahrzeugräder.

Artikel aus polymeren Werkstoffen, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen enthalten, die verschärften Anforderungen zumeist nicht mehr. Eine übliche Methode das Brandverhalten von Kautschukmischungen zu verbessern, ist das direkte Einmischen von brandhemmenden Substanzen. Allerdings führt diese Maßnahme bei den betroffenen Artikeln in der Regel dazu, dass sich die physikalischen Eigenschaften, insbesondere die Federungs-, Setz- bzw. Schwingungseigenschaften signifikant verschlechtern.

In WO 2014/019008 A1 wird zur Lösung dieses Problems vorgeschlagen, eine ausschließlich schwefelvernetzte zusätzliche äußere Lage, enthaltend ein Vinylacetathaltiges thermoplastisches Polymer, ein Doppelbindungen-enthaltendes, ungesättigtes Elastomer und zumindest ein Flammschutzmittel, zu verwenden. Diese zusätzliche äußere Lage muss über ein gezielt gesteuertes Vulkanisationsverfahren auf das Bauteil bzw. auf den Grundkörper des Bauteils bei vergleichsweise hohen Vulkanisationstemperaturen aufvulkanisiert werden. In WO 2014/019008A1 muss somit zweimal hintereinander ein Vulkanisationsprozess durchgeführt werden. Dies bedeutet nicht nur einen produktionstechnisch höheren Aufwand, sondern die zweifache Vulkanisation kann auch zu unerwünschten und schädlichen Reversionsvorgängen in der unter der äußeren Lage befindlichen bereits vulkanisierten Polymermischung, führen.

Des Weiteren sind Elastomere, die Doppelbindungen enthalten, wie sie bspw. in WO 2014/019008 A1 beschriebenen werden, alterungsanfälliger. Dies gilt somit vor allem für den in DE 10 2008 039 218 A1 beschriebenen Formartikel aus einer auf EPDM basierenden Kautschukmischung.

Eine Aufgabe der vorliegenden Erfindung ist es daher, eine Kautschukmischung bereitzustellen, die sich durch ein verbessertes Brandschutzverhalten auszeichnet und die nicht zu einer Erhöhung der Komplexität des Herstellverfahrens des elastischen Artikels führt. Gleichzeitig sollen die weiteren physikalischen Eigenschaften, wie sie insbesondere für den Einsatz der Kautschukmischung als Formartikel für den Schienenverkehr benötigt werden, nicht negativ beeinflusst werden.

Gelöst wird diese Aufgabe dadurch, dass die Kautschukmischung aus folgenden Bestandteilen besteht:
- 100 phr wenigstens eines Ethylen-Propylen-Kautschuks (EPM) und / oder wenigstens eines Ethylen-Propylen-Dien-Kautschuks (EPDM), und
- wenigstens einen Ruß und
- 0,5 bis 15 phr wenigstens eines Peroxids als Vernetzungsmittel und
- wenigstens ein Co-Agenz für die peroxidische Vernetzung, wobei das Co-Agenz ausgewählt ist aus der Gruppe, bestehend aus Trimethylolpropanoltrimethacyrlat (TMPTMA) und / oder Trimethylolpropantrimethacrylat (TRIM) und / oder Triallylcyanurat (TAC) und / oder Triallylisocyanurat (TAIC) und / oder Ethylenglycoldimethacrylat (EDMA) und / oder Diallylterephthalat (DATP) und / oder 1,4-Butandiolacrylat (BDDA) und / oder N,N'-m-Phenylenbismaleimid (MPBM) und / oder Bis(methacrylat)poly(ethlenglycole), wie bpsw. EDMA, DEDMA, TriEDMA oder TetraEDMA, und / oder Bis(allyl)poly(ethylenglocole), wie bspw. AEGA, ADEGA, ATriEGA oder ATetraEGA, und / oder Bis(allyl)alkandiole, wie bpsw. AEGA, ABUGA, AHDA, AODA oder ADGA, und / oder Bis(allyl)alkandithiole, wie bspw. AHTA oder ANTA, und / oder Bis(ethoxyallyl)disulfide (BEADS) und / oder 1-Allyloxyoctan (AOD) und / oder Triethylenglycolmono(metzhyl)mono(allyl)ether (ATriEGM), die alleine oder in Kombination verwendet werden können und
- weitere Mischungsbestandteile, die ausgewählt sind aus der Gruppe, enthaltend Zinkoxid, Alterungsschutzmittel, Weichmacher, Schwefel und Wachs.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass sich das Brandschutzverhalten vor allem zur Erfüllung der neuen Brandschutznorm EN45545 bei Verwendung einer derartigen Kautschukmischung deutlich verbessert. Es ist sogar möglich, den Hazard Level 3 (HL 3), d.h. die höchste Anforderung gemäß DIN EN 45545-2:2013-08, Kap 4.1 zu erfüllen. Die Kautschukmischung ist hierbei in einer bevorzugten Variante frei von brandhemmenden Additiven, d.h. die Menge an brandhemmenden Additiven beträgt bevorzugt 0 phr. Es sind auch keine brandhemmenden Beschichtungen und / oder Überzüge notwendig, d.h. der Artikel, der die Kautschukmischung enthält oder in einer bevorzugten Ausführungsform aus ihr besteht, ist frei von einer weiteren brandhemmenden Ausrüstung, insbesondere einer brandhemmenden Beschichtung und / oder einem brandhemmenden Überzug. Hierdurch wird zum einen die Komplexität bei der Herstellung des Artikels deutlich verringert, zum anderen sind in der Kautschukmischung selbst keine zum Teil gesundheitsgefährdenden Brandschutzmittel notwendig.

Erfindungsgemäß enthält die Kautschukmischung als Polymerkomponente 100 phr wenigstens eines EPM-Kautschuk und / oder wenigstens eines EPDM-Kautschuks.

Es kann somit entweder der EPM-Kautschuk alleine oder der EPDM-Kautschuk alleine oder ein Verschnitt aus EPM-Kautschuk und EPDM-Kautschuk verwendet werden.

Des Weiteren enthält die Kautschukmischung erfindungsgemäß wenigstens einen Ruß. Bevorzugt beträgt die Menge an Ruß 25 bis 100 phr.

Bevorzugt werden Ruße verwendet, die eine Iodzahl, gemäß ASTM D 1510, die auch als Iodabsorptionszahl bezeichnet wird, zwischen 40 und 100 g / kg und eine DBP-Zahl, zwischen 110 und 180 cm³ / 100g besitzen. Die DBP-Zahl gemäß ASTM D 2414 bestimmt das spezifische Absorptionsvolumen eines Rußes oder eines hellen Füllstoffes mittels Dibutylphthalat. Dies bedeutet, dass bevorzugt Ruße mit der Kennung N-5xx verwendet werden. Die Kennung der Ruße erfolgt gemäß der Klassifizierungstabelle der ASTM D 1765-13. Ruße der N-5xx-Reihe, insbesondere der Rußtyp N550, lassen sich besonders gut in die erfindungsgemäße Kautschukmischung einmischen.

In einer besonders bevorzugten Ausführungsform ist die Kautschukmischung frei von weiteren Füllstoffen, insbesondere frei von Kieselsäure.

EPM-Kautschuke werden in der Regel peroxidisch vernetzt, so dass wenigstens ein Peroxid in der Kautschukmischung vorhanden sein muss. Hierzu enthält die Kautschukmischung wenigstens ein Peroxid in Mengen von 0,5 bis 15 phr, bevorzugt in Mengen von 1 bis 8 phr. Als Peroxide können alle der fachkundigen Person bekannten Peroxide, insbesondere allerdings organische Peroxide, wie beispielsweise Benzoylperoxid, Di-t-butylperoxid, Dicumylperoxid oder Bis-(t-butylperoxy)-diisopropylbenzol, alleine oder in Kombination verwendet werden

Wichtig ist es, dass in der Kautschukmischung erfindungsgemäß wenigstens noch ein Co-Agenz für die peroxidische Vernetzung vorhanden ist. Co-Agentien sind in der Regel radikalübertragende Substanzen, welche die Effizienz der peroxidischen Vernetzung wesentlich verbessern.

Das Co-Agenz wird bevorzugt alleine oder in Kombination in einer Gesamtmenge von 0,5 bis 8 phr eingesetzt.
Das Co-Agenz ist ausgewählt aus der Gruppe, bestehend aus
Trimethylolpropanoltrimethacyrlat (TMPTMA) und / oder
Trimethylolpropantrimethacrylat (TRIM) und / oder Triallylcyanurat (TAC) und / oder Triallylisocyanurat (TAIC) und / oder Ethylenglycoldimethacrylat (EDMA) und / oder Diallylterephthalat (DATP) und / oder 1,4-Butandiolacrylat (BDDA) und / oder N,N'-m-Phenylenbismaleimid (MPBM) und / oder Bis(methacrylat)poly(ethlenglycole), wie bpsw. EDMA, DEDMA, TriEDMA oder TetraEDMA, und / oder Bis(allyl)poly(ethylenglocole), wie bspw. AEGA, ADEGA, ATriEGA oder ATetraEGA, und / oder Bis(allyl)alkandiole, wie bpsw. AEGA, ABUGA, AHDA, AODA oder ADGA, und / oder
Bis(allyl)alkandithiole, wie bspw. AHTA oder ANTA, und / oder Bis(ethoxyallyl)disulfide (BEADS) und / oder 1-Allyloxyoctan (AOD) und / oder
Triethylenglycolmono(metzhyl)mono(allyl)ether (ATriEGM) und kann alleine oder in Kombination verwendet werden.

Erfindungsgemäß enthält die Kautschukmischung noch weitere Mischungsbestandteile. Weitere Mischungsbestandteile im Rahmen der vorliegenden Erfindung können sein: Zinkoxid, Alterungsschutzmittel, Weichmacher, Schwefel und Wachs.

Besonders bevorzugt ist es, wenn die Kautschukmischung als weiteren Mischungsbestandteil wenigstens ein Wachs enthält.

Nach einer Neuformulierung eines Sonderausschusses der Deutschen Gesellschaft für Fettwissenschaft (DGF) ist der Begriff Wachse im engeren Sinne eine Sammelbezeichnung für Ester langkettiger Fettsäuren (C₂₄-C₃₆) (Wachssäuren) mit langkettigen Alkoholen (Fettalkohole) [C₁₅-C₃₆; z. B. Cetylalkohol (Hexadecan-1-ol, C₁₆H₃₃OH) und Stearylalkohol (Octadecan-1-ol, C₁₈H₃₇OH)], Triterpen- oder Steroidalkoholen (zum Beispiel Ambrein, Betulin), die verbreitet in Pflanzen und Tieren vorkommen.

Es können alle der fachkundigen Person bekannten natürlichen, chemisch modifizierte oder synthetische Wachse verwendet werden. Hierbei kann es sich beispielsweise um Baumwollwachs, Carnaubawachs, Candelillawachs, Espartowachs, Guarumawachs, Japanwachs, Korkwachs, Montanwachs, Ouricurywachs, Reiskeimölwachs, Zuckerrohrwachs, Bienenwachs, Bürzeldrüsenfett, Wollwachs, Schellackwachs, Walrat, Mikrowachse, Ceresin, Ozokerit, hydrierte Jojobawachse, Montanwachs, Sasolwachse, Polyalkylenwachse, wie bspw. Polyolefinwachse, Polyethylenwachse, Polypropylenwachse, Polyethylenglycolwachse, oder Amidwachse handeln.

Bevorzugt ist es allerdings, wenn es sich um Carnaubawachs, Paraffinwachs oder insbesondere um Polyethylenwachs handelt.

Die Wachse können alleine oder in Kombination eingesetzt werden.

Die Gesamtmenge an Wachsen beträgt 0 bis 15 phr, bevorzugt 0,1 bis 15 phr, besonders bevorzugt 2 bis 10 phr und ganz besonders bevorzugt 3 bis 8 phr.

Der Einsatz von Wachs hat den Vorteil, dass die Verarbeitungs- und Extrusionseigenschaften der Kautschukmischung weiter verbessert werden.

Als weiteren Mischungsbestandteil enthält die Kautschukmischung bevorzugt zusätzlich Zinkoxid. Das Zinkoxid hat nicht nur einen positiven Einfluss auf die elastischen Eigenschaften, sondern auch auf die Alterungsbeständigkeit und ggf. auf die Wärmeleitfähigkeit der Mischung.

Zur besseren Einstellung der peroxidischen Vernetzung ist in den weiteren Mischungsbestandteilen noch Schwefel enthalten.

Besonders bevorzugt ist es, wenn die Kautschukmischung frei von Weichmachern und / oder frei von Alterungsschutzmitteln ist. Die Menge an Weichmachern beträgt somit bevorzugt 0 phr und / oder die Menge an Alterungsschutzmitteln beträgt 0 phr. Um die Mischungszusammensetzung möglichst einfach zu gestalten, ist die Kautschukmischung bevorzugt frei sowohl von Weichmachern als auch von Alterungsschutzmitteln.

In einer besonders bevorzugten Ausführungsform besteht die Kautschukmischung somit aus folgenden Bestandteilen:
- 100 phr wenigstens eines Ethylen-Propylen-Kautschuks (EPM) und
- wenigstens einen Ruß und
- 0,5 bis 15 phr wenigstens eines Peroxids als Vernetzungsmittel und
- wenigstens ein Co-Agenz für die peroxidische Vernetzung, wobei das Co-Agenz ausgewählt ist aus der Gruppe, bestehend aus Trimethylolpropanoltrimethacyrlat (TMPTMA) und / oder Trimethylolpropantrimethacrylat (TRIM) und / oder Triallylcyanurat (TAC) und / oder Triallylisocyanurat (TAIC) und / oder Ethylenglycoldimethacrylat (EDMA) und / oder Diallylterephthalat (DATP) und / oder 1,4-Butandiolacrylat (BDDA) und / oder N,N'-m-Phenylenbismaleimid (MPBM) und / oder Bis(methacrylat)poly(ethlenglycole), wie bpsw. EDMA, DEDMA, TriEDMA oder TetraEDMA, und / oder Bis(allyl)poly(ethylenglocole), wie bspw. AEGA, ADEGA, ATriEGA oder ATetraEGA, und / oder Bis(allyl)alkandiole, wie bpsw. AEGA, ABUGA, AHDA, AODA oder ADGA, und / oder Bis(allyl)alkandithiole, wie bspw. AHTA oder ANTA, und / oder Bis(ethoxyallyl)disulfide (BEADS) und / oder 1-Allyloxyoctan (AOD) und / oder Triethylenglycolmono(metzhyl)mono(allyl)ether (ATriEGM),die alleine oder in Kombination verwendet werden können und
- Zinkoxid und
- wenigstens ein Wachs und
- Schwefel.

Die erfindungsgemäße Kautschukmischung wird für die Herstellung eines elastischen Artikels verwendet. Der Artikel ist bevorzugt ein Luftfederbalg, ein Metall-Gummi-Element, ein Schwingungsdämpfer oder ein Lager, bspw. Kastenlager oder ein Konuslager, insbesondere ein Formartikel für gummigefederte Schienenfahrzeugräder.

Der elastische Artikel kann die Kautschukmischung enthalten oder vollständig aus ihr bestehen.

Die Erfindung soll nun anhand von Vergleichs- und Ausführungsbeispielen, die in der Tabelle 1a und 1b zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

In Tabelle 1a ist dabei die Mischungszusammensetzung dargestellt, während in Tabelle 1b die dazugehörigen entsprechenden physikalischen Eigenschaften und in Tabelle 1c die entsprechenden Brandschutzprüfungen illustriert sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| **Bestandteile** | **Einheit** | **V1** | **E1** |
|---|---|---|---|
| EPM oder EPDM | phr | 100 | 100 |
| Öl | phr | 75 | -- |
| Ruß, N339 | phr | 145 | -- |
| Ruß, N550 | phr | -- | 81 |
| ZnO | phr | 5 | 10 |
| Wachs | phr | 7 | 4 |
| Peroxid | phr | 10 | 8 |
| Schwefel | phr | - | 0,4 |
| Co-Agenz | phr | -- | 3 |

**Tabelle 1b**

| | **Einheit** | **V1** | **E1** |
|---|---|---|---|
| Härte DIN 53505 | Shore A | 80 | 80 |
| Zugfestigkeit DIN 53504 S3A | N/mm² | 10 | 19 |
| Bruchdehnung DIN 53504 S3A | % | 160 | 190 |
| Druckverformungsrest, 25% Verf., 70°C DIN ISO 815 | % | 10 | 10 |
| Druckverformungsrest, 25% Verf., 150°C DIN ISO 815 | % | 15 | 10 |
| Weiterreißwiderstand DIN ISO 34-1A | N/mm | 3 | 4 |

**Tabelle 1c**

| Brandprüfung (DIN EN 45545-2, Tab 5) | **Einheit** | **V1** | **E1** |
|---|---|---|---|
| MARHE (ISO 5660-1) | kWm⁻² | | 3 |
| Ds (max) EN ISO 5659-2 | ohne | | 3 |
| CIT EN ISO 5659-2 | ohne | | 3 |

## Patentansprüche

1. Kautschukmischung, **dadurch gekennzeichnet, dass** sie aus folgenden Bestandteilen besteht:
- 100 phr wenigstens eines Ethylen-Propylen-Kautschuks (EPM) und / oder wenigstens eines Ethylen-Propylen-Dien-Kautschuks (EPDM) und
- wenigstens einen Ruß und
- 0,5 bis 15 phr wenigstens eines Peroxids als Vernetzungsmittel und
- wenigstens ein Co-Agenz für die peroxidische Vernetzung, wobei das Co-Agenz ausgewählt ist aus der Gruppe, bestehend aus Trimethylolpropanoltrimethacyrlat (TMPTMA) und / oder Trimethylolpropantrimethacrylat (TRIM) und / oder Triallylcyanurat (TAC) und / oder Triallylisocyanurat (TAIC) und / oder Ethylenglycoldimethacrylat (EDMA) und / oder Diallylterephthalat (DATP) und / oder 1,4-Butandiolacrylat (BDDA) und / oder N,N'-m-Phenylenbismaleimid (MPBM) und / oder Bis(methacrylat)poly(ethlenglycole), wie bpsw. EDMA, DEDMA, TriEDMA oder TetraEDMA, und / oder Bis(allyl)poly(ethylenglocole), wie bspw. AEGA, ADEGA, ATriEGA oder ATetraEGA, und / oder Bis(allyl)alkandiole, wie bpsw. AEGA, ABUGA, AHDA, AODA oder ADGA, und / oder Bis(allyl)alkandithiole, wie bspw. AHTA oder ANTA, und / oder Bis(ethoxyallyl)disulfide (BEADS) und / oder 1-Allyloxyoctan (AOD) und / oder Triethylenglycolmono(metzhyl)mono(allyl)ether (ATriEGM), die alleine oder in Kombination verwendet werden können und
- weitere Mischungsbestandteile, die ausgewählt sind aus der Gruppe, enthaltend Zinkoxid, Alterungsschutzmittel, Weichmacher, Schwefel und Wachs.

2. Kautschukmischung nach Anspruch 1, **dadurch gekennzeichnet, dass** sie 25 bis 100 phr wenigstens eines Rußes enthält.

3. Kautschukmischung nach Anspruch 1 oder 2, **dadurch gekennzeichnet, dass** der Ruß eine Iodzahl gemäß ASTM D 1510 zwischen 40 und 100 g / kg und eine DBP-Zahl gemäß ASTM D 2414 zwischen 110 und 180 cm³ / 100g besitzt.

4. Kautschukmischung nach einem der Ansprüche 1 bis 3, **dadurch gekennzeichnet, dass** sie als weiteren Mischungsbestandteil wenigstens ein Wachs enthält.

5. Kautschukmischung nach Anspruch 4, **dadurch gekennzeichnet, dass** das Wachs ein Polyethylenwachs ist.

6. Elastischer Artikel, **dadurch gekennzeichnet, dass** er wenigstens eine Kautschukmischung gemäß einem der Ansprüche 1 bis 5 enthält.

7. Elastischer Artikel, **dadurch gekennzeichnet, dass** er aus einer Kautschukmischung gemäß einem der Ansprüche 1 bis 5 besteht.

8. Elastischer Artikel nach Anspruch 6 oder 7, **dadurch gekennzeichnet, dass** es sich um einen Luftfederbalg, ein Metall-Gummi-Element, einen Schwingungsdämpfer oder ein Lager, bspw. Kastenlager oder ein Konuslager, insbesondere ein Formartikel für gummigefederte Schienenfahrzeugräder, handelt.

## Claims

1. Rubber mixture, **characterized in that** it consists of the following constituents:
- 100 phr of at least one ethylene-propylene rubber (EPM) and/or at least one ethylene-propylenediene rubber (EPDM) and
- at least one carbon black and
- 0.5 to 15 phr of at least one peroxide as crosslinker and
- at least one co-agent for peroxidic crosslinking, wherein the co-agent is selected from the group consisting of trimethylol propanol trimethacyrlate (TMPTMA) and/or trimethylolpropane trimethacrylate (TRIM) and/or triallyl cyanurate (TAG) and/or triallyl isocyanurate (TAIC) and/or ethylene glycol dimethacrylate (EDMA) and/or diallyl terephthalate (DATP) and/or 1,4-butanediol acrylate (BDDA) and/or N,N'-m-phenylenebismaleimide (MPBM) and/or bis(methacrylate) poly(ethylene glycols), for example EDMA, DEDMA, TriEDMA or TetraEDMA, and/or bis(allyl) poly(ethylene glycols), for example AEGA, ADEGA, ATriEGA or ATetraEGA, and/or bis(allyl) alkanediols, for example AEGA, ABUGA, AHDA, AODA or ADGA, and/or bis(allyl) alkanedithiols, for example AHTA or ANTA, and/or bis(ethoxyallyl)disulfide (BEADS) and/or 1-allyloxyoctane (AOD) and/or triethylene glycol mono(methyl) mono(allyl) ether (ATriEGM), which may be used alone or in combination and
- further mixture constituents selected from the group containing zinc oxide, aging protectants, plasticizers, sulfur and wax.

2. Rubber mixture according to Claim 1, **characterized in that** it contains 25 to 100 phr of at least one carbon black.

3. Rubber mixture according to Claim 1 or 2, **characterized in that** the carbon black has an iodine number according to ASTM D 1510 between 40 and 100 g/kg and a DBP number according to ASTM D 2414 between 110 and 180 cm³/100 g.

4. Rubber mixture according to any of Claims 1 to 3, **characterized in that** it contains as a further mixture constituent at least one wax.

5. Rubber mixture according to Claim 4, **characterized in that** the wax is a polyethylene wax.

6. Elastic article, **characterized in that** it contains at least one rubber mixture according to any of Claims 1 to 5.

7. Elastic article, **characterized in that** it consists of at least one rubber mixture according to any of Claims 1 to 5.

8. Elastic article according to Claim 6 or 7, **characterized in that** it is an air spring bellows, a metal-rubber element, a vibration damper or a bearing, for example box bearing or a conical bearing, in particular a moulded article for rubber-sprung rail vehicle wheels.

## Revendications

1. Mélange de caoutchoucs, **caractérisé en ce qu'il** est constitué des ingrédients suivants :
- 100 phr d'au moins un caoutchouc d'éthylène-propylène (EPM) et/ou d'au moins un caoutchouc d'éthylène-propylène-diène (EPDM) et
- au moins une suie et
- 0,5 à 15 phr d'au moins un peroxyde en tant qu'agent de réticulation et
- au moins un co-agent pour la réticulation peroxydique, le co-agent étant choisi dans le groupe constitué par le triméthacrylate de triméthylolpropanol (TMPTMA) et/ou le triméthacrylate de triméthylolpropane (TRIM) et/ou le cyanurate de triallyle (TAC) et/ou l'isocyanurate de triallyle (TAIC) et/ou le diméthacrylate d'éthylèneglycol (EDMA) et/ou le téréphtalate de dialkyle (DATP) et/ou l'acrylate de 1,4-butanediol (BDDA) et/ou le N,N'-m-phénylènebismaléidimide (MPBM) et/ou des bis(méthacrylate)(polyéthylèneglycols), comme par exemple EDMA, DEDMA, TriEDMA ou TétraEDMA, et/ou des bis(allyl)(polyéthylèneglycols), comme par exemple AEGA, ADEGA, ATriEGA ou ATétraEGA, et/ou des bis(allyl)alcanediols, comme par exemple AEGA, ABUGA, AHDA, AODA ou ADGA, et/ou des bis(allyl)alcanedithiols, comme par exemple AHTA ou ANTA, et/ou des bis(éthoxyallyl)disulfures (BEADS) et/ou le 1-allyloxyoctane (AOD) et/ou le triéthylèneglycolmono(méthyl)mono(allyl)éther (ATriEGM), qui peuvent être utilisés seuls ou en combinaison et
- d'autres ingrédients de mélange, qui sont choisis dans le groupe contenant l'oxyde de zinc, des agents de protection contre le vieillissement, des plastifiants, du soufre et une cire.

2. Mélange de caoutchoucs selon la revendication 1, **caractérisé en ce qu'il** contient 25 à 100 phr d'au moins une suie.

3. Mélange de caoutchoucs selon la revendication 1 ou 2, **caractérisé en ce que** la suie possède un indice d'iode selon la norme ASTM D 1510 compris entre 40 et 100 g/kg et un indice de DBP selon la norme ASTM D 2414 compris entre 110 et 180 cm³/100 g.

4. Mélange de caoutchoucs selon l'une quelconque des revendications 1 à 3, **caractérisé en ce qu'il** contient au moins une cire en tant qu'ingrédient de mélange supplémentaire.

5. Mélange de caoutchoucs selon la revendication 4, **caractérisé en ce que** la cire est une cire de polyéthylène.

6. Article élastique, **caractérisé en ce qu'il** contient au moins un mélange de caoutchoucs selon l'une quelconque des revendications 1 à 5.

7. Article élastique, **caractérisé en ce qu'il** est constitué d'un mélange de caoutchoucs selon l'une quelconque des revendications 1 à 5.

8. Article élastique selon la revendication 6 ou 7, **caractérisé en ce que** c'est un soufflet de suspension pneumatique, un élément de métal-caoutchouc, un amortisseur de vibrations ou un palier, par exemple un caisson de palier ou un cône de palier, en particulier un article moulé pour roues de véhicule sur le rail élastiques avec caoutchouc.
